(19) Europäisches Patentamt
European Patent Office
Office européen des brevets

(11) Publication number: 0 074 276
A1

(12) # EUROPEAN PATENT APPLICATION

(21) Application number: 82304707.1

(22) Date of filing: 08.09.82

(51) Int. Cl.³: C 08 F 10/02
C 08 F 4/64

(30) Priority: 08.09.81 JP 140362/81

(43) Date of publication of application: 16.03.83 Bulletin 83/11

(84) Designated Contracting States: DE FR GB IT

(71) Applicant: Ube Industries, Ltd.
12-32, Nishihonmachi 1-chome
Ube-shi, Yamaguchi-ken(JP)

(72) Inventor: Ueno, Haruo
3-10-203, Inagekaigan 3-chome
Chiba-shi Chiba-ken(JP)

(72) Inventor: Yano, Takefumi
13-35, Wakamiya 2-chome
Ichihara-shi Chiba-ken(JP)

(72) Inventor: Inoue, Tokuji
975-19, Fukumasu
Ichihara-shi Chiba-ken(JP)

(72) Inventor: Ikai, Shigeru
44-3, Yamaki
Ichihara-shi Chiba-ken(JP)

(72) Inventor: Kai, Yoshiyuki
860-5, Saze
Ichihara-shi Chiba-ken(JP)

(72) Inventor: Shimizu, Michimasa
44-3, Yamaki
Ichihara-shi Chiba-ken(JP)

(72) Inventor: Tamura, Masanori
44-3, Yamaki
Ichihara-shi Chiba-ken(JP)

(74) Representative: Fisher, Bernard et al,
Raworth, Moss & Cook 36 Sydenham Road
Croydon Surrey CR0 2EF(GB)

(54) **Process for polymerization of ethylene.**

(57) Ethylene is polymerized in the presence of a catalyst formed from a solid catalyst component and an organic aluminum compound of the formula: $AlR^4_3$ wherein $R^4$ is $C_{1-8}$ alkl. The solid catalyst component is prepared by reacting a reaction product of an aluminum halide and an organic silicon compound of the formula: $R^1_nSi(OR^2)_{4-n}$ wherein $R^1$ and $R^2$ are independently phenyl or $C_{1-8}$ alkyl and n is 0, 1, 2, or 3, with a Grignard compound of the formula: $R^3MgX$ wherein $R^3$ is $C_{1-8}$ alkyl and X is halogen; and subjecting the resulting carrier to a contact treatment with a titanium tetrahalide at least two times.

EP 0 074 276 A1

# PROCESS FOR POLYMERIZATION OF ETHYLENE

## BACKGROUND OF THE INVENTION

### (1) Field of the Invention

This invention relates to a process for the polymerization of ethylene.

### (2) Description of the Prior Art

Many proposals have been made on the process for polymerizing ethylene in the presence of a catalyst formed from a solid catalyst component comprising a titanium compound supported on a magnesium-containing compound, and an organic aluminum compound. The inventors previously proposed a process for polymerizing ethylene in the presence of a catalyst formed from a solid catalyst component prepared by reacting a reaction product of an aluminum halide and a tetraalkoxysilane with a Grignard compound and then contacting the resulting carrier with a titanium tetrahalide, and an organic aluminum compound (see Japanese Unexamined Patent Publication No. 56-55,405/81). According to this process, polyethylene can be obtained in a high yield per unit weight of the solid catalyst component.

## SUMMARY OF THE INVENTION

A primary object of the present invention is to provide an improved process for the polymerization of ethylene wherein polyethylene is produced in a more enhanced yield per unit weight of the solid catalyst component.

More specifically, in accordance with the present invention, a process is provided for the polymerization of ethylene which comprises polymerizing ethylene in the presence of a catalyst formed from a solid catalyst component and an organic aluminum compound represented by the following general formula:

$$AlR^4_3 \qquad [III]$$

wherein $R^4$ stands for an alkyl group having 1 to 6 carbon atoms,

said solid catalyst component being prepared by reacting a reaction product of an aluminum halide and an organic

silicon compound represented by the following formula:

$$R^1_nSi(OR^2)_{4-n} \qquad [I]$$

wherein $R^1$ and $R^2$ independently stand for a phenyl group or an alkyl group having 1 to 8 carbon atoms and n is 0, 1, 2 or 3,

with a Grignard compound represented by the following formula:

$$R^3MgX \qquad [II]$$

wherein $R^3$ stands for an alkyl group having 1 to 8 carbon atoms, and X stands for a halogen atom,

and subjecting the resulting carrier to a contact treatment with a titanium tetrahalide at least two times.

DESCRIPTION OF THE PREFERRED EMBODIMENTS

According to the present invention, the yield of polyethylene per unit weight of the solid catalyst component used for the polymerization reaction is very high. Therefore, the amount of the catalyst used may be very small and the catalyst residue in formed polyethylene need not be removed.

In the present invention, the solid catalyst component is prepared from substantially anhydrous compounds in an atmosphere of an inert gas such as nitrogen or argon.

As examples of the aluminum halide, aluminum chloride, aluminum bromide, and aluminum iodide can be mentioned. Of these, aluminum chloride is preferable.

As examples of the organic silicon compound represented by the formula [I], tetramethoxysilane, tetraethoxysilane, tetrabutoxysilane, tetrapentoxysilane, methyltrimethoxysilane, methyltriethoxysilane, methyltri-n-butoxysilane, methyltriisopentoxysilane, methyltri-n-hexoxysilane, methyltriisooctoxysilane, ethyltriethoxysilane, ethyltriisopropoxysilane, ethyltriisopentoxysilane, n-butyltriethoxysilane, isobutyltriethoxysilane, isopentyltriethoxysilane, isopentyltri-n-butoxysilane, dimethyldiethoxysilane, dimethyldi-n-butoxysilane, dimethyldiisopentoxysilane, diethyldiethoxysilane, diethyldiisopentoxysilane, di-n-butyldiethoxysilane, diisobutyldiisopentoxysilane, trimethyl-

methoxysilane, trimethylethoxysilane, trimethylisobutoxysilane, triethylisopropoxysilane, tri-n-propylethoxysilane, tri-n-butylethoxysilane, triisopentylethoxysilane, phenyltriethoxysilane, phenyltriisobutoxysilane, phenyltriisopentoxysilane, diphenyldiethoxysilane, diphenyldiisopentoxysilane, diphenyldioctoxysilane, triphenylmethoxysilane, triphenylethoxysilane, triphenylisopentoxysilane, tetraphenoxysilane, trimethylphenoxysilane, triethylphenoxysilane and dimethyldiphenoxysilane can be mentioned.

It is preferable that the aluminum halide be used for the reaction in an amount of 0.25 to 10 moles, especially 0.5 to 2 moles, per mole of the organic silicon compound.

The reaction of the aluminum halide with the organic silicon compound is ordinarily carried out by stirring both the compounds in an inert organic solvent at a temperature of from -50°C to 100°C for 0.1 to 2 hours. The reaction is advanced with generation of heat, and the reaction product is obtained in the form of a solution in the inert organic solvent. The reaction product need not be isolated and may be used in the form of the above solution for the reaction with a Grignard compound.

As the Grignard compound represented by the formula [II], an alkyl magnesium chloride, i.e., the compound in which X is a chloride atom, is preferably used. As specific examples, methyl magnesium chloride, ethyl magnesium chloride, n-butyl magnesium chloride and n-hexyl magnesium chloride can be mentioned.

It is preferable that the Grignard compound be used in an amount of 0.05 to 4 moles, especially 0.5 to 2 moles, per mole of the organic silicon compound used for the formation of the reaction product.

The method in which the reaction product of the aluminum halide with the organic silicon compound is reacted with the Grignard compound is not particularly critical, but it is preferable that the reaction be effected by gradually adding a solution of the Grignard compound in an ether or an ether/aromatic hydrocarbon mixed solvent to a solution of

the above-mentioned reaction product in an organic solvent or by adding the solution of the above-mentioned reaction product to the solution of the Grignard compound. A compound represented by the following formula:

$$R^5-O-R^6$$

wherein $R^5$ and $R^6$ stand for an alkyl group having 2 to 8 carbon atoms,

is preferably used as the ether in which the Grignard compound is dissolved. As examples of the ether, diethyl ether, diisopropyl ether, di-n-butyl ether and diisoamyl ether can be mentioned.

The reaction is carried out ordinarily at a temperature of from -50 to 100°C and preferably at a temperature of from -20 to 25°C. The reaction time is not particularly critical, but ordinarily, the reaction is conducted for not less than 5 minutes. As the reaction proceeds, the formed carrier is precipitated. The so obtained carrier is washed with an inert organic solvent and is then subjected to a contact treatment with a titanium tetrahalide.

In the present invention, the carrier is subjected to the contact treatment with the titanium tetrahalide at least two times.

As examples of the titanium tetrahalide, titanium tetrachloride, titanium tetrabromide and titanium tetraiodide can be mentioned. Of these, titanium tetrachloride is preferable.

It is preferable that the amount of the titanium tetrachloride to be used for each contact treatment be at least 1 mole, more preferably 2 to 100 moles, per mole of the Grignard compound used for the formation of the carrier.

The carrier may be contacted with the titanium tetrahalide in the presence or absence of an inert organic solvent. It is preferable that the contact temperature be from 20 to 200°C, more preferably from 60 to 140°C. The contact time is not particularly critical, but ordinarily, the contact time is 0.5 to 3 hours.

It is indispensable that the contact treatment of the

carrier with the titanium tetrahalide be conducted at least two times. Ordinarily, it is sufficient if the treatment is conducted 2 to 4 times. After completion of each contact treatment, the treated carrier is recovered by filtration and if desired, the recovered carrier is washed with an inert organic solvent.

The solid catalyst component is isolated from the so obtained mixture containing the solid catalyst component by filtration or decantation and is then washed with an inert organic solvent. The solid catalyst component contains 0.5 to 10% by weight of titanium.

As the inert organic solvent used at the respective steps for the preparation of the solid catalyst component, aliphatic hydrocarbons such as hexane and heptane, aromatic hydrocarbons such as toluene, benzene and xylene, and halogenated products of these hydrocarbons can be mentioned.

In the present invention, ethylene is polymerized in the presence of a catalyst formed from the solid catalyst component and the organic aluminum compound represented by the formula [III].

As examples of the organic aluminum compound, trimethyl aluminum, triethyl aluminum, triisobutyl aluminum and tri--n-hexyl aluminum can be mentioned. Of these, triethyl aluminum and triisobutyl aluminum are preferable.

The organic aluminum compound is ordinarily used in an amount of 1 to 1,000 moles per gram-atom of titanium contained in the solid catalyst component.

The polymerization of ethylene may be carried out in the liquid phase or gaseous phase.

When the polymerization reaction is carried out in the liquid phase, an aliphatic hydrocarbon such as n-butane, n-propane, n-hexane or n-heptane, an alicyclic hydrocarbon such as cyclohexane or cyclopentane or an aromatic hydrocarbon such as benzene or toluene is used as the polymerization solvent. The catalyst concentration in the polymerization solvent is not particularly critical. Ordinarily, the concentration is such that the amount of the solid

catalyst component is 0.0005 to 10 mg-atoms, as titanium metal, per liter of the polymerization solvent and the amount of the organic aluminum compound is 0.001 to 1,000 millimoles per liter of the polymerization solvent.

In the present invention, ethylene may be either homopolymerized or copolymerized with an α-olefin having at least 3 carbon atoms, such as propylene, 1-butene, 4-methyl--1-pentene or 1-hexene.

The polymerization is carried out in the substantially water-free and oxygen-free state as in the polymerization of ethylene using an ordinary Ziegler catalyst.

The polymerization temperature is ordinarily from 30°C to 100°C, and the polymerization pressure is ordinarily from 1 to 80 $kg/cm^2$.

The molecular weight of the resulting ethylene polymer can easily be adjusted by adding hydrogen to the polymerization system.

The present invention will now be described in detail with reference to the following examples.

In the Examples, the "polymerization activity" indicates the yield (g) of the polymer per gram of the solid catalyst component used for the polymerization, and "M.I." represents the melt flow index as measured at 190°C under a load of 2.16 $kg/cm^2$ according to ASTM D-1238. Incidentally, in each example, the preparation of the solid catalyst component was carried out in an atmosphere of dry nitrogen gas.

Example 1

(1) Preparation of Solid Catalyst Component:

To 15 millimoles of anhydrous aluminum chloride was added 30 ml of toluene, and 13.5 ml of a solution of 14.5 millimoles of phenyltriethoxysilane in toluene was dropped into the mixture at 25°C over a period of 30 minutes. Then the mixture was heated to 60°C and maintained at that temperature for 1 hour to conduct the reaction.

The reaction mixture was cooled to 11 to 7°C, and 18 ml of diisoamyl ether containing 27 millimoles of n-butyl magnesium chloride was dropped into the reaction

mixture over a period of 40 minutes. Then the reaction mixture was heated to 30°C and maintained at that temperature for 60 minutes to conduct the reaction. The precipitated carrier was recovered by filtration and was washed three times by using 30 ml of toluene each time.

The carrier was suspended in 30 ml of toluene and 15.0 ml of titanium tetrachloride was added to the suspension. The mixture was stirred at 90°C for 60 minutes whereby the solid was contacted with titanium tetrachloride. At the same temperature the treated carrier was recovered by filtration, and the carrier was washed three times with 30 ml of n-heptane each time and seven times with 30 ml of toluene each time.

In the same manner as described above, the contact treatment with titanium tetrachloride was repeated. The treatment was conducted three times alltogether.

To 3.3 g of the so obtained solid catalyst component (titanium content = 5.5% by weight) was added 100 ml of n-heptane to form a slurry of the solid catalyst component.

(2) Polymerization:

A glass ampoule having the suspension of the solid catalyst component (3.0 mg as the solid catalyst component) sealed therein was attached to a 2-liter inner volume autoclave equipped with a stirrer, and air in the autoclave was replaced by nitrogen.

Then, 1 ℓ of n-hexane was introduced into the autoclave, and 1.5 ml of n-hexane containing triethyl aluminum in an amount of 300 moles per gram-atom of titanium in the solid catalyst component was introduced into the autoclave. Then, the content in the autoclave was heated to 90°C. At this temperature, the inner pressure (gauge pressure; each of the pressures given hereinafter is a gauge pressure) of the autoclave was 0.9 $Kg/cm^2$.

Ethylene was introduced into the autoclave until the total pressure reached 7.9 $Kg/cm^2$, and stirring was initiated and then the glass ampoule was broken. Ethylene

was polymerized at 90°C for 60 minutes. During the polymerization, ethylene was continuously supplied so that the total pressure was maintained at 7.9 $Kg/cm^2$.

After completion of the polymerization reaction, unreacted ethylene was discharged, and the formed polymer was recovered by filtration and dried under reduced pressure at 50°C for 20 hours to obtain 384 g of white polyethylene. The polymerization activity was 120,000, the density was 0.948 $g/cm^3$ and the bulk specific gravity was 0.38.

Examples 2 and 3

The procedure of Example 1 was repeated in the same manner except that the mole number of triethyl aluminum per gram-atom of titanium contained in the solid catalyst component (hereinafter referred to as "Al/Ti ratio") was varied as indicated in Table 1. The obtained results are shown in Table 1.

Table 1

| Example No. | Al/Ti Ratio | Polymerization activity | Bulk Specific Gravity |
|---|---|---|---|
| 2 | 600 | 112,000 | 0.38 |
| 3 | 200 | 126,000 | 0.37 |

Examples 4 through 6

The procedure of Example 1 was repeated in the same manner except that, prior to introduction of ethylene, hydrogen was introduced so that the hydrogen pressure shown in Table 2 was produced, and ethylene was introduced so that the ethylene pressure was 7 $kg/cm^2$. Ethylene was continuously supplied so that the initial total pressure was maintained throughout the polymerization. Other polymerization conditions remained substantially the same as adopted in Example 1. The obtained results are shown in Table 2.

Table 2

| Example No. | Hydrogen Pressure ($kg/cm^2$) | Polymerization Activity | M.I. (g/10 min) |
|---|---|---|---|
| 4 | 1 | 113,000 | 0.2 |
| 5 | 3 | 102,000 | 2.4 |
| 6 | 5 | 96,000 | 3.1 |

Examples 7 through 11

The procedure of Example 1 was repeated in the same manner except that a compound shown in Table 3 was used in an amount of 14.5 millimoles (Examples 7 through 9) or 22.0 millimoles (Example 10) instead of phenyltriethoxysilane. The content of titanium in the solid catalyst component and the polymerization results are shown in Table 3.

Table 3

| Example No. | Organic Silicon Compound | Titanium Content (% by weight) | Polymerization Activity | Bulk Specific Gravity |
|---|---|---|---|---|
| 7 | Methyl-triethoxysilane | 5.32 | 116,000 | 0.37 |
| 8 | Tetraiso-pentoxysilane | 5.12 | 121,000 | 0.38 |
| 9 | Tetraethoxysilane | 5.31 | 118,000 | 0.36 |
| 10 | Dimethyl-diethoxysilane | 5.11 | 118,000 | 0.37 |
| 11 | Tetraphenoxy-silane | 5.62 | 106,000 | 0.36 |

Examples 12 through 14

A glass ampoule having, sealed therein, the solid catalyst component slurry prepared in Example 1 (2.0 mg as the solid catalyst component) was attached to a 2-liter inner volume autoclave equipped with a stirrer, and air in the autoclave was replaced by nitrogen.

Then, 1 ml of n-heptane containing triethyl aluminum in such an amount as providing an Al/Ti ratio of 300 was introduced into the autoclave. Then, hydrogen was introduced into the autoclave until the hydrogen pressure reached a predetermined level. Then, predetermined amounts of liquid butene-1 and liquid n-butane were introduced under pressure into the autoclave. The content in the autoclave was heated to 66°C and ethylene was introduced into the autoclave until the ethylene pressure reached a predetermined level (the total pressure was 28 kg/cm$^2$). Stirring was started and the ampoule was broken, and thus ethylene was copolymerized with butene-1 at 66°C for 60 minutes. During the polymerization, ethylene was continuously supplied so that the total pressure was maintained at 28 kg/cm$^2$.

After completion of the polymerization, the unreacted monomers and n-butane were removed from the polymerization product and the recovered ethylene/butene-1 copolymer was dried under reduced pressure at 50°C for 20 hours. The polymerization results are shown in Table 4.

Table 4

| Example No. | Hydrogen Pressure (kg/cm$^2$) | Butene-1 (ml) | n-Butane (ml) | Ethylene Pressure (kg/cm$^2$) | Polymerization Activity | Density (g/cm$^3$) |
|---|---|---|---|---|---|---|
| 12 | 5 | 200 | 1,000 | 10.3 | 78,800 | 0.928 |
| 13 | 1 | 200 | 1,000 | 16.3 | 87,600 | 0.921 |
| 14 | 1 | 400 | 800 | 8.5 | 92,200 | 0.910 |

Example 15

The procedure of Example 1 was repeated in the same manner except that the contact treatment of the carrier with titanium tetrachloride was conducted two times. The titanium component in the solid catalyst component was 5.51% by weight.

The polymerization activity was 116,000, and the bulk specific gravity of the formed polyethylene was 0.38.

Comparative Example 1

The procedure of Example 10 was repeated in the same manner except that the contact treatment of the carrier with titanium tetrachloride was conducted only once. The titanium content of the solid catalyst component was 5.90% by weight.

The polymerization activity was 62,100, and the bulk specific gravity of the formed ethylene was 0.36.

CLAIMS

1. A process for the polymerization of ethylene which comprises polymerizing ethylene in the pressure of a catalyst formed from a solid catalyst component and an organic aluminum compound represented by the following formula:

$AlR^4_3$

wherein $R^4$ stands for an alkyl group having 1 to 6 carbon atoms,

said solid catalyst component being prepared by reacting a reaction product of aluminum halide and an organic silicon compound represented by the following formula:

$R^1_nSi(OR^2)_{4-n}$

wherein $R^1$ and $R^2$ independently stand for a phenyl group or an alkyl group having 1 to 8 carbon atoms and n is 0, 1, 2 or 3,

with a Grignard compound represented by the following formula:

$R^3MgX$

wherein $R^3$ stands for an alkyl group having 1 to 8 carbon atoms, and X stands for a halogen atom,

and subjecting the resulting carrier to a contact treatment with a titanium tetrahalide at least two times.

2. A process according to claim 1 wherein the reaction product of an aluminum halide and the organic silicon compound is prepared by reacting 0.25 to 10 moles, per mole of the organic silicon compound, of an aluminum halide with the organic silicon compound in an inert organic solvent at a temperature of -50 to 100°C for 0.1 to 2 hours.

3. A process according to claim 1 or 2, wherein the aluminum halide is aluminum chloride.

4. A process according to claim 1 or 2, wherein the organic silicon compound is tetraethoxysilane, tetrapentoxysilane, methyltriethoxysilane, tetraphenoxysilane or dimethyldiethoxysilane.

5. A process according to claim 1, wherein the reaction product of an aluminum halide with the organic

silicon compound is reacted with 0.05 to 4 moles of the Grignard compound, per mole of the organic silicon compound used for the preparation of said reaction product, in a manner such that a solution of said reaction product in an inert organic solvent is gradually incorporated with a solution of the Grignard compound in an ether or a mixed solvent of an ether and an aromatic organic solvent, said ether being represented by the formula:

$$R^5-O-R^6$$

wherein $R^5$ and $R^6$ stand for an alkyl group having 2 to 8 carbon atoms.

6. A process according to claim 1 or 5, wherein said Grignard compound is alkyl magnesium chloride.

7. A process according to claim 1, wherein said carrier, prepared by the reaction of the reaction product of an aluminum halide and the organic silicon compound with the Grignard compound, is washed with an inert organic solvent prior to said contact treatment with a titanium tetrahalide.

8. A process according to claim 1, wherein said contact treatment of the carrier with a titanium tetrahalide is carried out 2 to 4 times at a temperature of 20 to 200°C for 0.5 to 3 hours.

9. A process according to claim 1 or 8, wherein the amount of the titanium tetrahalide used for each contact treatment is at least one mole per mole of the Grignard compound used for the preparation of the carrier.

10. A process according to claim 1 or 8, wherein the titanium tetrahalide is titanium tetrachloride.

11. A process according to claim 1, wherein the amount of an organic aluminum compound is in the range of 1 to 1,000 moles per gram-atom of titanium contained in the solid catalyst component.

12. A process according to claim 1, wherein the organic aluminum compound is triethyl aluminum or triisobutyl aluminum.

13. A process according to claim 1, wherein ethylene is polymerized in a solvent selected from the group consisting of aliphatic hydrocarbons, alicyclic hydrocarbons and aromatic hydrocarbons, said solvent containing, per liter of the solvent, 0.0005 to 10 mg-atoms of the solid catalyst component expressed in terms of titanium contained therein, and 0.001 to 1,000 millimoles of the organic aluminum compound.

14. A solid catalyst component for the polymerization of ethylene which is prepared by reacting a reaction product of an aluminum halide and an organic silicon compound represented by the following formula:

$$R^1_nSi(OR^2)_{4-n}$$

wherein $R^1$ and $R^2$ independently stand for a phenyl group or an alkyl group having 1 to 8 carbon atoms and n is 0, 1, 2 or 3,

with a Grignard compound represented by the following formula:

$$R^3MgX$$

wherein $R^3$ stands for an alkyl group having 1 to 8 carbon atoms and X stands for a halogen atom,

and subjecting the resulting carrier to a contact treatment with a titanium tetrahalide at least two times.

15. A solid catalyst component according to claim 14, wherein the reaction product of an aluminum halide and the organic silicon compound being prepared by reacting 0.25 to 10 moles, per mole of the organic silicon compound, of a aluminum halide with the organic silicon compound in an inert organic solvent at a temperature of -50 to 100°C for 0.1 to 2 hours.

16. A solid catalyst component according to claim 14 or 15, wherein the aluminum halide is aluminum chloride.

17. A solid catalyst component according to claim 14 or 15, wherein the organic silicon compound is tetraethoxysilane, tetrapentoxysilane, methyltriethoxysilane, tetraphenoxysilane or dimethyldiethoxysilane.

18. A solid catalyst component according to claim 14, wherein the reaction product of an aluminum halide with the

organic silicon compound is reacted with 0.05 to 4 moles of the Grignard compound, per mole of the organic silicon compound used for the preparation of said reaction product, in a manner such that a solution of said reaction product in an inert organic solvent is gradually incorporated with a solution of the Grignard compound in an ether or a mixed solvent of an ether and an aromatic organic solvent, said ether being represented by the formula:

$$R^5-O-R^6$$

wherein $R^5$ and $R^6$ stand for an alkyl group having 2 to 8 carbon atoms.

19. A solid catalyst component according to claim 14 or 18, wherein said Grignard compound is alkyl magnesium chloride.

20. A solid catalyst component according to claim 14, wherein said carrier, prepared by the reaction of the reaction product of an aluminum halide and the organic silicon compound with the Grignard compound, is washed with an inert organic solvent prior to said contact treatment with a titanium tetrahalide.

21. A solid catalyst component according to claim 14, wherein said contact treatment of the carrier with a titanium tetrahalide is carried out 2 to 4 times at a temperature of 20 to 200°C for 0.5 to 3 hours.

22. A solid catalyst component according to claim 14 or 21, wherein the amount of the titanium tetrahalide used for each contact treatment is at least one mole per mole of the Grignard compound used for the preparation of the carrier.

23. A solid catalyst component according to claim 14 or 21, wherein the titanium tetrahalide is titanium tetrachloride.

European Patent Office

# EUROPEAN SEARCH REPORT

0074276

Application number

EP 82 30 4707

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| | --- | | C 08 F 10/02<br>C 08 F 4/64 |
| Y | EP-A-0 027 366 (UBE INDUSTRIES)<br>*Claims 1-21*<br>--- | 1-21 | |
| Y | EP-A-0 026 027 (UBE INDUSTRIES)<br>*Claims 1,5-15,18-20,22-24*<br>----- | 1-21 | |
| | | | TECHNICAL FIELDS SEARCHED (Int. Cl. 3) |
| | | | C 08 F |

The present search report has been drawn up for all claims

| Place of search | Date of completion of the search | Examiner |
|---|---|---|
| THE HAGUE | 21-12-1982 | WEBER H. |

CATEGORY OF CITED DOCUMENTS

X : particularly relevant if taken alone
Y : particularly relevant if combined with another document of the same category
A : technological background
O : non-written disclosure
P : intermediate document
T : theory or principle underlying the invention
E : earlier patent document, but published on, or after the filing date
D : document cited in the application
L : document cited for other reasons
& : member of the same patent family, corresponding document

EPO Form 1503. 03.82